# EUROPÄISCHE PATENTSCHRIFT

(11) **EP 2 332 284 B1**
(45) Veröffentlichungstag und Bekanntmachung des Hinweises auf die Patenterteilung: **12.02.2014**
(21) Anmeldenummer: 09768957.4
(22) Anmeldetag: 22.06.2009
(51) Int. Cl.: H04L 9/32

(54) **Freischalten eines Dienstes auf einem elektronischen Gerät**
Releasing a service on an electronic appliance
Activation d'un service sur un appareil électronique

(30) Priorität: 23.06.2008 DE 102008029636
(43) Veröffentlichungstag der Anmeldung: 15.06.2011
(73) Patentinhaber: Giesecke & Devrient GmbH, 81677 München (DE)
(72) Erfinder: SPITZ, Stephan, 81247 München (DE); SCHERZER, Helmut, 72070 Tübingen (DE); URHAHN, Thorsten, 89081 Ulm (DE); BORGS, Hans, 83620 Feldkirchen-Westerham (DE)
(86) Internationale Anmeldenummer: PCT/EP2009/004482
(87) Internationale Veröffentlichungsnummer: WO 2009/156108

(56) Entgegenhaltungen:
- WO-A1-99/38070
- WO-A2-01/42889
- PAUL ENGLAND ED - PETER LIPP ET AL: "Practical Techniques for Operating System Attestation", 11. März 2008 (2008-03-11), TRUSTED COMPUTING - CHALLENGES AND APPLICATIONS; [LECTURE NOTES IN COMPUTER SCIENCE], SPRINGER BERLIN HEIDELBERG, BERLIN, HEIDELBERG, PAGE(S) 1 - 13, XP019089481, ISBN: 978-3-540-68978-2 Seite 9, Absatz 4.2 - Seite 11, Zeile 10

## Beschreibung

Die vorliegende Erfindung betrifft ein Verfahren zum Freischalten eines von einem elektronischen Gerät bereitgestellten Dienstes, ein derartiges elektronisches Gerät sowie ein System, welches ein derartiges elektronisches Gerät umfasst.

Für portable Datenträger und mobile elektronische Geräte sind vielfältige Sicherheitsmechanismen bekannt, die die Integrität des Geräts und der darauf gespeicherten Daten oder die eindeutige Identifizierung des Datenträgers oder seines Besitzers sicherstellen sollen.

Die technische Basis solcher, die Integrität schützender bzw. eine Identifizierung ermöglichender Mechanismen ist oft ein besonders abgesicherter Speicherbereich, um darin z.B. Identifikationsdaten manipulationssicher abzulegen. Es existieren beispielsweise besondere Isolationsmechanismen, durch die Hardwarebereiche und/oder Zugänge zu Softwarekomponenten eines Endgeräts für sicherheitskritische Daten und Prozesse eingerichtet und von entsprechend ungesicherten Bereichen wirksam abgeschottet werden können, z.B. durch Softwarelösungen, wie sichere virtuelle Prozessoren, oder Hardwarelösungen, wie dezidierte Sicherheitskerne. Innerhalb eines solchen abgesicherten Bereichs können insbesondere sicherheitskritische Prozesse ausgeführt werden, z.B. in durch eine sichere Laufzeitumgebung mittels eines geeigneten Interpreters.

Daten, die eine Individualisierung oder Identifizierung von portablen Datenträgem betreffen, werden aus Sicherheits- und Praktikabilitätsgründen zumeist während des Herstellungsprozesses bzw. zumindest vor der Ausgabe des betreffen Datenträgers an einen Benutzer in dem Datenträger abgespeichert, z.B. in einen abgesicherten Bereich einer Chipkarte, Smart Card oder dergleichen. Eine entsprechende Individualisierung von beliebigen mobilen Endgeräten im Rahmen eines Herstellungsprozesses ist jedoch mit erheblichen Kosten aufgrund der dafür notwendigen Infrastruktur und einem daraus resultierenden geringeren Durchsatz verbunden.

Prinzipiell stehen zur Individualisierung von mobilen Endgeräten kryptographische Verfahren zur Verfügung, beispielsweise basierend auf einem auf dem zu individualisierenden Endgerät vorliegenden symmetrischen Schlüsselpaar, dessen öffentlicher Schlüssel von einer vertrauenswürdigen Zertifizierungsinstanz mit einem elektronischen Zertifikat versehen wird. Durch eine Zertifizierung können Kommunikationspartner des betreffenden Geräts, die dessen öffentlichen Schlüssel zur Verschlüsselung oder zur Prüfung einer Signatur des Geräts verwenden, sicherstellen, dass der öffentliche Schlüssel auch tatsächlich von dem betreffenden Gerät stammt und nicht zu Betrugszwecken untergeschoben wurde.

In diesem Zusammenhang schlägt die WO 2008/049959 A2 ein Zertifizierungsverfahren gemäß der PKCS-Spezifikation ("Public Key Cryptography Standard") in einer Mobilfunkumgebung mit möglicherweise eingeschränkter Übertragungsrate und Netzsicherheit vor. Die US 2005/0010757 offenbart ein Zertifizierungsverfahren in einem verteilten Netzwerk, bei dem eine Zertifizierungsanfrage eines Netzwerkknotens gegenüber einem Zertifizierungsserver aus Sicherheitsgründen nur innerhalb eines vorgegebenen Zeitintervalls ab der Initialisierung des entsprechenden Netzwerkknotens möglich ist, was im Zusammenhang mit mobilen Endgeräten wiederum eine an sich nicht praktikable Individualisierung zeitnah mit deren üblicher Initialisierung im Rahmen der Herstellung erfordern würde. Der Eingang einer Zertifikatanfrage eines Netzknotens innerhalb des zulässigen Zeitintervalls wird anhand der dem Zertifizierungsserver vorliegenden Initialisierungszeit des Netzknotens und der Zeitintervalldauer überwacht.

WO 01/42889 A2 (D1) offenbart den Oberbegriff von Anspruch 1 und schlägt die Verwendung von Boot-Zertifikaten und Software-Zertifikaten auf einem Computer vor, um den Bootprozess auf dem Computer abzusichern. Die verwendeten Software-Zertifikate sind nur für einen begrenzten Zeitraum gültig. Der Computer fordert daher von einem Server ein neues Zertifikat an, wenn das alte Software-Zertifikat abgelaufen ist.

Es die Aufgabe der vorliegenden Erfindung, eine sichere, praktikable und kostengünstige Möglichkeit zur Individualisierung von elektronischen, mobilen Endgeräten bereitzustellen.

Diese Aufgabe wird erfindungsgemäß durch ein Verfahren, ein elektronisches Gerät sowie ein System mit den Merkmalen der unabhängigen Ansprüche gelöst. Die davon abhängigen Ansprüche beschreiben vorteilhafte Ausgestaltungen und Weiterbildungen der Erfindung.

Auf einem elektronischen Gerät wird ein bereitgestellter aber noch nicht für die Inanspruchnahme - z.B. die Ausführung durch einen Benutzer des Geräts - freigeschalteter Dienst durch einen Registrierungsvorgang gegenüber einem Registrierungsserver freigeschaltet. Ein solcher freizuschaltender Dienst kann prinzipiell jede beliebige Funktions- oder Ressourcenerweiterung des elektronischen Geräts sein, insbesondere die Freischaltung eines individualisierten Betriebs auf einem zunächst nicht individualisierten Gerät oder eines abgesicherten, isolierten Bereichs zur Bereitstellung weiterer Si-cherheitsfunktionalitäten des Endgeräts.

Hierbei wird im folgenden unter "Registrierung" die Datenkommunikation zwischen dem elektronischen Gerät und dem Registrierungsserver verstanden, während als Ergebnis der Registrierung die eigentliche Bereitstellung des betreffenden Diensts auf dem Gerät zu Nutzung durch den Benutzer als "Freischaltung" bezeichnet wird. Insofern erzeugt das elektronische Gerät im Rahmen eines Registrierungsvorgangs eine Registrierungsanfrage und sendet diese an den Registrierungsserver, welcher in Beantwortung der empfangenen Registrierungsanfrage eine Registrierungsbestätigung erzeugt und an das Gerät zurücksendet. Schließlich wird der betreffende Dienst auf dem Gerät freigeschaltet, indem die empfangene Registrierungsbestätigung in einer vorgesehenen Weise auf dem Gerät abgespeichert wird.

Erfindungsgemäß richtet eine vertrauenswürdige dritte Instanz für den oben skizzierten Registrierungsvorgang ein Zeitfenster derart ein, dass ausschließlich eine innerhalb dieses Zeitfensters empfangene Registrierungsanfrage durch den Registrierungsserver bearbeitet wird und zu einer Registrierung des betreffenden Dienstes gegenüber dem Registrierungsserver führen kann. Der betreffende Dienst kann also nur dann freigeschaltet werden, wenn die Registrierungsanfrage innerhalb des eingerichteten Zeitfensters an den Registrierungsserver gesendet wird; eine außerhalb dieses Zeitfensters (oder sogar vor dem Einrichten des Zeitfensters) beim Registrierungsserver eintreffende Registrierungsanfrage wird von dem Registrierungsserver zumindest nicht mit einer Registrierungsbestätigung beantwortet. Hierbei kann das Zeitfenster von der vertrauenswürdigen Instanz prinzipiell mit beliebigem Start- und Endzeitpunkt eingerichtet werden, z.B. auch periodisch wiederholend oder dergleichen.

Insofern kann die Registrierung und Freischaltung eines Dienstes innerhalb eines nahezu beliebigen Zeitfensters von dem Gerät selbst mit hinreichender Sicherheit durchgeführt werden. Dies ist insbesondere bei solchen Diensten von Vorteil, die im Rahmen des Produktionsprozesses nur unter erheblichem Ressourcenaufwand freizuschalten wären, z.B. im Rahmen zeitaufwändiger Initialisierungsprozesse von bestimmten Diensten, oder die eine Individualisierung des elektronischen Geräts in einer Umgebung erfordern, die prinzipiell unsicherer ist, als die weitestgehend abgesicherte Produktionsumgebung. Weiter kann die Registrierung und Freischaltung flexibel eingerichtet werden, z.B. in Abhängigkeit von Vorgaben oder Verhaltensweisen des Benutzers eines elektronischen Geräts oder vom freizuschaltenden Dienst selbst, z.B. indem das Zeitfenster auf einen Installations- oder Initialisierungsvorgang des Dienstes auf dem Gerät abgestimmt wird.

Ein erfindungsgemäßes elektronisches Gerät umfasst demzufolge zumindest ausreichende Ressourcen zum Bereitstellen von Diensten, z.B. in Form von Softwareapplikationen, insbesondere einen Prozessor und einen oder mehrere Speicher. Darüber hinaus umfasst ein elektronisches Gerät eine Datenkommunikationsschnittstelle, die die im Rahmen des Registrierungsvorgangs durchzuführende Datenkommunikation mit dem Registrierungsserver ermöglicht, und eine Registrierungseinrichtung, die den Registrierungsprozess und das abschließende Freischalten eines Dienstes durch Abspeichern einer empfangenen Registrierungsbestätigung steuert. Die Registrierungseinrichtung ist erfindungsgemäß derart eingerichtet, dass die Registrierungsanfrage innerhalb des von der vertrauenswürdigen Instanz auf dem Registrierungsserver eingerichteten Zeitfensters an den Registrierungsserver gesendet wird, d.h. die Registrierungseinrichtung besitzt oder erhält das ausreichende Informationen über das Zeitfenster und stimmt den Registrierungsvorgang hierauf ab.

Die Registrierungseinrichtung kann eine zeitgerechte Registrierungsanfrage an den Registrierungsserver sicherstellen, indem z.B. eine Registrierungsanfrage automatisch innerhalb eines auf der Registrierungseinrichtung bereits bei der Herstellung, Einrichtung oder Initialisierung des Gerät konfigurierten Zeitfensters gesendet wird, oder indem die Registrierungsanfrage in Reaktion auf eine das Zeitfenster bestimmende Information von der vertrauenswürdigen Instanz oder dem Registrierungsserver gesendet wird.

Ein erfindungsgemäßes Registrierungssystem umfasst demnach ein elektronisches Gerät, einen Registrierungsserver und eine vertrauenswürdige Instanz, die jeweils derart eingerichtet sind und zusammenwirken, dass ein von dem elektronischen Gerät bereitgestellter Dienst gemäß dem oben beschriebenen Registrierungsvorgang freigeschaltet werden kann.

Hierbei ist der Registrierungsserver vorzugsweise ein mit einer besonderen Vertrauenswürdigkeit ausgestatteter Zentralserver, der z.B. von einem Hersteller des elektronischen Geräts oder einer ähnlich vertrauenswürdigen Stelle eingerichtet und autorisiert wurde, die Registrierung von Diensten vorzunehmen.

Die vertrauenswürdige Instanz kann beispielsweise eine Kommunikationsvorrichtung eines Zwischenhändlers sein, der erfindungsgemäße elektronische Geräte oder auf solchen Geräten zu installierende und freizuschaltende Dienste vertreibt, oder ein Kreditinstitut, eine Behörde oder eine sonstige derartige Instanz. Die Vertrauenswürdigkeit dieser Instanz bzw. des entsprechenden Kommunikationsvorrichtung wird durch eine Authentifizierung gegenüber dem Registrierungsserver hergestellt, beispielsweise kryptographisch oder mittels eines Kennworts. Dadurch wird die Vertrauenswürdigkeit des Registrierungsservers auf die Instanz ausgeweitet, die dadurch berechtigt wird, ein Zeitfenster auf dem Registrierungsserver einzurichten.

Die vertrauenswürdige Instanz kann dem Registrierungsserver entweder ein in der Zukunft liegendes Zeitfenster durch entsprechende Zeitsignale mitteilen oder das Zeitfenster durch ein Startsignal aktiv auf den Registrierungsserver starten. Im letztgenannten Fall kann der Registrierungsserver das Zeitfenster bei Empfang eines Stoppsignals oder bei Ablauf einer vorgegebenen Zeitdauer schließen. Insbesondere kann die vertrauenswürdige Instanz ein Zeitfenster mit einem beliebigen Startzeitpunkt nach der Herstellung des elektronischen Geräts einrichten, z.B. nach der Ausgabe des elektronischen Geräts an einen Benutzer (z.B. durch die vertrauenswürdige Instanz) oder der Installation eines freizuschaltenden Dienstes auf dem elektronischen Gerät.

Die von der Registrierungseinrichtung erzeugte Registrierungsanfrage umfasst vorzugsweise eine eindeutige Identifikation des jeweils freizuschaltenden Dienstes, so dass insbesondere die Möglichkeit besteht, dass der Registrierungsserver die Freischaltung dieses Dienstes und insofern dessen Benutzungszeit durch einen Benutzer protokollieren und abrechnen kann. Insbesondere sofern es sich bei dem freizuschaltenden Dienst nicht um eine dezidierte Softwareapplikation oder dergleichen handelt, sondern um eine grundlegende Funktionserweiterung des elektronischen Geräts, kann anstelle einer eindeutigen Identifikation des freizuschaltenden Dienstes (oder zusätzlich hierzu) auch eine eindeutige Identifikation des elektronischen Geräts in die Registrierungsanfrage integriert werden. Die eindeutige Geräteinformation kann die Seriennummer des Gerätes sein. Diese eindeutige Dienst- oder Geräteinformation kann von dem Registrierungsserver auch dazu verwendet werden, einen erneuten Freischaltversuch mittels einer erneuten Registrierungsanfrage anhand der dem Registrierungsserver vorliegenden Dienst- oder Geräteidentifikation zu erkennen und zu blockieren. Natürlich ist es auch möglich, dass eine Freischaltung nur für einen vorgegebenen Zeitraum wirksam ist und nach Ablauf dieses Zeitraums eine erneute Registrierung/Freischaltung des betreffenden Dienstes erfolgen muss. Auch dies kann anhand einer Dienst- oder Geräteidentifikation erkannt und verwaltet werden.

Von dem Gerät bereitzustellende Dienste, die grundlegende Funktionserweiterungen des elektronischen Geräts repräsentieren, können z.B. die Einrichtung eines abgesicherten, isolierten Bereichs auf dem Gerät betreffen, der hardware- und softwaremäßig vollständig gegenüber einem verbleibenden ungesicherten Bereich des elektronischen Geräts abgekoppelt ist, um in diesem isolierten Bereich sicherheitsrelevante Daten zu speichern und sicherheitsrelevante Prozesse auszuführen.

Andererseits kann eine solche grundlegende Funktionserweiterung des elektronischen Geräts, wie bereit oben angesprochen, auch darin bestehen, einen individualisierten Betrieb des Geräts einzurichten, indem das Gerät im Rahmen des Registrierungsvorgangs mit einer von Dritten verifizierbaren, individuellen Kennung ausgestattet wird, durch die die Identität des Geräts zweifelsfrei feststellbar ist.

Zum Freischalten eines solchen individualisierten Betriebs des elektronischen Geräts kann die Registrierungseinrichtung des elektronischen Geräts beispielsweise eine Zertifikatanfrage an einen Zertifizierungsserver richten, die zumindest einen öffentlichen Schlüssel eines auf dem Gerät vorliegenden oder von dem Gerät erzeugten asymmetrischen Schlüsselpaars umfasst. Mit der Zertifikatanfrage wird also ein Antrag an den als Zertifizierungsserver ausgestalteten Registrierungsserver gestellt, den öffentlichen Schlüssel des elektronischen Geräts zu zertifizieren und dadurch die Vertrauenswürdigkeit des Zertifizierungsserver auf den öffentlichen Schlüssel zu übertragen.

Falls das elektronische Gerät einen zertifizierten öffentlichen Schlüssel einem Kommunikationspartner zur kryptographischen Sicherung von Nachrichten oder zur Überprüfung einer kryptographischen Signatur zur Verfügung stellt, kann der betreffende Kommunikationspartner anhand des Zertifikats verifizieren, ob der ihm vorliegende öffentliche Schlüssel tatsächlich mit dem auf dem elektronischen Gerät vorliegenden privaten Schlüssel korrespondiert. Dementsprechend erstellt der Zertifizierungsserver bei Eingang der Zertifikatanfrage das Zertifikat für den öffentlichen Schlüssel und schickt das Zertifikat als Registrierungsbestätigung an das elektronische Gerät zurück. Durch das Zertifikat kann das Gerät dann seine eigene Vertrauenswürdigkeit und Identität gegenüber beliebigen Kommunikationspartnern nachweisen, wodurch ein individualisierter Betrieb des Geräts ermöglicht wird. Das Zertifikat umfasst eine Unterschrift, die - für Dritte verifizierbar - die Dienst- oder Geräteidentifikation mit dem erzeugten öffentlichen Schlüssel verknüpft.

Die Registrierungsanfrage umfasst also in der Regel eine Dienstidentifikation und/oder eine Geräteidentifikation. Die Registrierungsbestätigung wird für eine Dienstidentifikation und/oder eine Geräteidentifikation erstellt, die entweder mit der Registrierungsanfrage empfangen oder für die Registrierungsanfrage ermittelt werden. Die Registrierungsbestätigung kann eine digitale Signatur enthalten, die über die Dienstidentifikation und/oder die Geräteidentifikation und gegebenenfalls über weitere Daten, wie den erzeugten öffentlichen Schlüssel, gebildet wird.

Vorzugsweise wird zumindest der private Schlüssel des asymmetrischen Schlüsselpaars und ein etwaiges empfangenes Zertifikat des öffentlichen Schlüssels in einem abgesicherten Bereich des Geräts hinterlegt. Dieser abgesicherte Bereich ist vorzugsweise ein isolierter und ausgehend von einem etwaigen ungesicherten Bereich des Geräts nicht zugänglicher, abgeschotteter Hardware- und Softwarebereich. Ein solcher isolierter Bereich kann zur Ausführung von sicherheitskritischen Prozessen, z.B. die Erzeugung eines asymmetrischen Schlüsselpaars, eine sichere Laufzeitumgebung mit einem entsprechenden Interpreter aufweisen. Insbesondere kann der gesamte beschriebene Registrierungsprozess innerhalb einer derartigen sicheren Laufzeitumgebung ausgeführt werden, so dass die Registrierungseinrichtung eine als Prozess von der Laufzeitumgebung ausführbare Applikation, Betriebssystemapplikation oder eine sonstige Softwarekomponente des elektronischen Geräts sein kann.

Vorzugsweise ist eine Registrierungseinrichtung, die eine Zertifikatanfrage erstellt und versendet sowie das Zertifikat empfängt und ablegt, als Bootlader bzw. als Teil eines mehrstufigen Bootladers des elektronischen Geräts realisiert. Bei Vorhandensein eines abgesicherten, isolierten Bereichs mit einer sicheren Laufzeitumgebung kann eine als Bootlader ausgebildete Registrierungseinrichtung insbesondere in einen mehrstufigen Bootvorgang des elektronischen Geräts bzw. des abgesicherten Bereichs und der sicheren Laufzeitumgebung eingebunden sein.

Vorzugsweise wird der individualisierte Betrieb des elektronischen Geräts bei einem erstmaligen Bootvorgang nach Auslieferung des Geräts an einen Händler oder Benutzer durchgeführt. Selbstverständlich kann das Freischalten eines Dienstes im Rahmen eines (erstmaligen) Bootvorgangs auch für beliebige andere Dienste vorgesehen sein, insbesondere auch für grundlegende Funktionserweiterungen des Geräts, z.B. das Freischalten eines abgesicherten, isolierten Bereichs auf dem elektronischen Gerät.

Weitere Merkmale und Vorteile der Erfindung ergeben sich aus der folgenden Beschreibung von erfindungsgemäßen Ausführungsbeispielen sowie weiteren Ausführungsalternativen im Zusammenhang mit den beiliegenden Zeichnungen, die zeigen:
- Figur 1: ein Flussdiagramm eines erfindungsgemäßen Verfahrens;
- Figur 2: ein erfindungsgemäßes Registrierungssystem; und
- Figur 3: eine besondere Ausführungsform einer erfindungsgemäßen Registrierungseinrichtung.

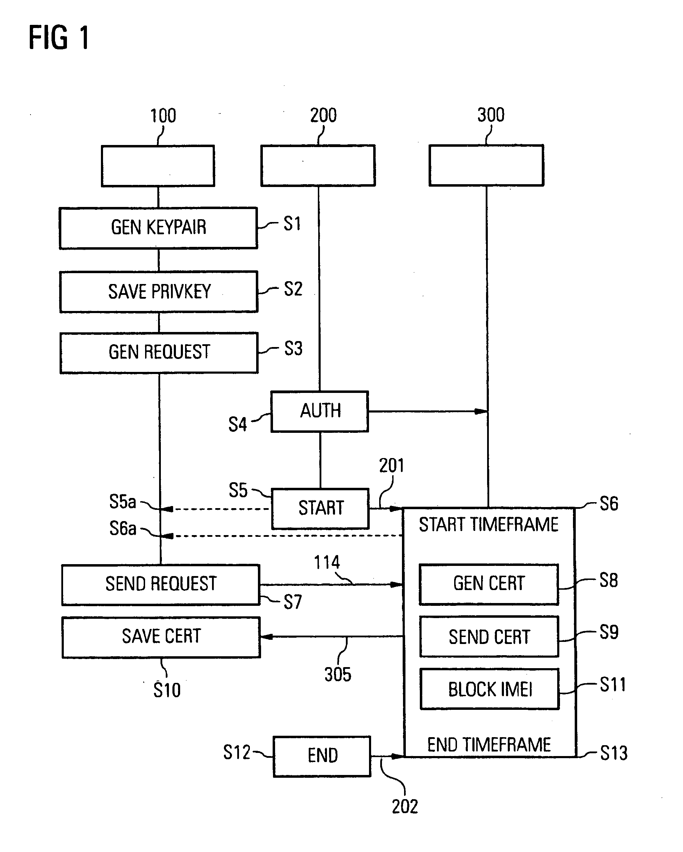

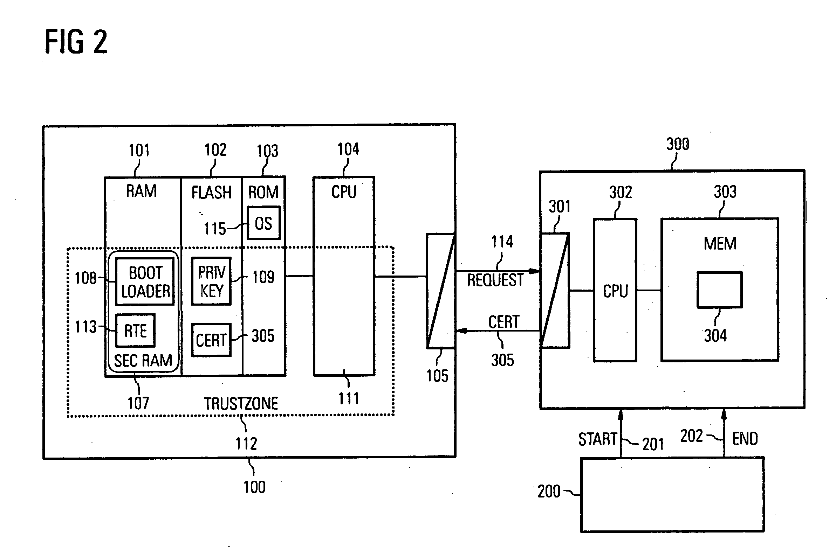

Die Initialisierung bzw. Individualisierung eines elektronischen Geräts 100, z.B. eines mobilen (Telekommunikations-) Endgeräts, eines eingebetteten Systems, eines Einchipsystems ("System on a Chip") oder eines portablen Datenträgers, wie z.B. einer Chipkarte, Mobilfunkkarte, sicheren Multimediakarte oder dergleichen, kann über eine kryptographische Infrastruktur durchgeführt werden, indem ein öffentlicher Schlüssel eines auf dem elektronischen Gerät vorliegenden asymmetrischen Schlüsselpaars von einer hierzu eingerichteten und autorisierten Stelle, beispielsweise einem Zertifizierungsserver 300, zertifiziert wird. Neben dem elektronischen Gerät 100 und dem Zertifizierungsserver 300 umfasst das in den Figuren 1 und 2 illustrierte Zertifizierungssystem eine vertrauenswürdige Instanz 200, z.B. einen entsprechend eingerichteten Computer einer Behörde oder sonstigen vertrauenswürdigen Instanz oder dergleichen.

Der Ablauf des von dem Zertifizierungssystem durchgeführten Zertifizierungsprozesses ist in Fig. skizziert. Zunächst erzeugt das elektronische Gerät 100 in Schritt S1 ein asymmetrisches Schlüsselpaar (GEN KEYPAIR), wobei der private Schlüssel des asymmetrischen Schlüsselpaares in Schritt S2 in einem möglichst manipulationssicheren, abgesicherten Bereich 112 des elektronischen Geräts 100 abgespeichert wird (SAVE PRIVKEY). Auf diese Weise ist der private Schlüssel mit dem elektronischen Gerät 100 fest assoziiert, so dass eine Nachricht, die ein Kommunikationspartner des elektronischen Geräts 100 mit dem korrespondierenden öffentlichen Schlüssel verschlüsselt ausschließlich von dem elektronischen Gerät 100 entschlüsselt werden kann. Ebenso kann das elektronische Gerät 100 durch Verschlüsseln einer Nachricht mit dem privaten Schlüssel eine kryptographische Signatur erzeugen, anhand derer die die Herkunft einer gesendeten Nachricht von dem Empfänger mittels des öffentlichen Schlüssels des Geräts 100 geprüft werden kann. Dies ist beides jedoch nur dann mit hinreichender Sicherheit möglich, wenn ein Kommunikationspartner des elektronischen Geräts davon ausgehen kann, dass der vorliegende öffentliche Schlüssel tatsächlich von dem betreffenden elektronischen Gerät stammt (d.h. dass das elektronische Gerät den korrespondierenden privaten Schlüssel besitzt) und nicht im Rahmen eines Betrugsversuches untergeschoben wurde. Mit anderen Worten muss das elektronische Gerät individualisiert, d.h. für einen individualisierten Betrieb eingerichtet sein.

Die Verifikation einer eindeutigen Zuordnung des öffentlichen Schlüssels zu dem Gerät 100 kann sichergestellt werden, indem der öffentliche Schlüssel von dem Zertifizierungsserver 300 mit einem elektronischen Zertifikat 305 versehen wird, d.h. eindeutig der Identität des elektronischen Geräts 100 zugeordnet wird. Ein Kommunikationspartner des Geräts 100, dem der öffentliche Schlüssel vorliegt, kann dann anhand des Zertifikats 305 prüfen, ob der öffentliche Schlüssel tatsächlich von dem elektronischen Gerät 100 stammt.

Dazu erzeugt das Gerät 100 in Schritt S3 eine Zertifizierungsanfrage 114, die zumindest den zu zertifizierenden öffentlichen Schlüssel, vorzugsweise auch eine eindeutige Identifikation des elektronischen Geräts, z.B. dessen IMEI-Nummer, umfasst (GEN REQUEST). Die Zertifizierungsanfrage 114 wird von dem Registrierungsserver 300 jedoch ausschließlich innerhalb eines vorgegebenen Zeitfensters entgegengenommen und mit dem gewünschten Zertifikat 305 beantwortet, so dass das Gerät 100 den Schritt S7 des Sendens der Zertifikatanfrage 114 erst durchführen kann (SEND REQUEST), wenn das entsprechende Zeitfenster auf dem Registrierungsserver 300 geöffnet ist.

Das Zeitfenster wird von einer vertrauenswürdigen Instanz 200 auf dem Zertifizierungsserver 300 eingerichtet. Dazu authentisiert sich die Instanz 200 in Schritt S4 zunächst gegenüber dem Zertifizierungsserver 300, z.B. kryptographisch bzw. mit einem Kennwort (AUTH), um die Vertrauenswürdigkeit von dem Zertifizierungsserver 300 attestiert zu bekommen und somit die Autorisierung zum Einrichten des Zeitfensters zu erwerben. Das Zeitfenster wird dann durch Senden eines Startsignals 201 in Schritt S5 (START) auf dem Zertifizierungsserver 300 in Schritt S6 geöffnet (START TIMEFRAME). Nachdem der Zertifizierungsserver 300 eine in Schritt S7 gesendete Zertifizierungsanfrage 114 nach dem Beginn des Zeitfensters empfängt, erzeugt der Registrierungsserver 300 in Schritt S8 ein Zertifikat 305 zu den empfangenen öffentlichen Schlüssel (GEN CERT) und sendet das Zertifikat 305 in Schritt S9 an das elektronische Gerät 100 zurück (SEND CERT).

Das Gerät 100 speichert das empfangene Zertifikat 305 in Schritt S10 vorzugsweise in dem gleichen abgesicherten Bereich (SAVE CERT), in dem bereits der private Schlüssel in Schritt S2 gespeichert wurde, und kann zukünftig seinen öffentlichen Schlüssel potenziellen Kommunikationspartnern zusammen mit dem Zertifikat 305 vorlegen und dadurch seine Identität nachweisen.

In Schritt S11 wird die eindeutige Geräteidentifikation, z.B. die IMEI-Nummer, die der Zertifizierungsserver 300 im Zusammenhang mit der Zertifikatanfrage 114 erhalten hat, abgespeichert, um einen erneuten Zertifizierungsversuch des gleichen Geräts 100 zu erkennen und als Missbrauchsversuch blockieren zu können (BLOCK IMEI), da jede weitere Zertifizierungsanfrage mit einem unterschiedlichen öffentlichen Schlüssel als Betrugsversuch gewertet werden kann. Das Ende des Zeitfensters kann entweder, wie in Figur 1 illustriert, durch ein explizites Endsignal 202 in Schritt S12 durch die vertrauenswürdige Instanz bewirkt werden (END), woraufhin das Zeitfenster in Schritt S13 geschlossen wird (END TIMEFRAME). Ebenso ist es möglich, dass das Zeitfenster unmittelbar nach Senden des Zertifikats 305 an das elektronische Gerät 100 in Schritt S8 automatisch geschlossen wird oder dass die vertrauenswürdige Instanz im Rahmen des Startsignals 115 in Schritt S5 bereits die Dauer des Zeitfensters an den Registrierungsserver 300 übermittelt hat, nach deren Ablauf das Zeitfenster von dieser automatisch geschlossen wird.

Hinsichtlich der Koordination zwischen dem Senden der Zertifikatanfrage 114 in Schritt S6 und dem Öffnen/Schließen des Zeitfensters in den Schritten S5 und S12 sind mehrere Varianten denkbar. Einerseits kann das Gerät 100 bereits mit einer entsprechenden (z.B. bereits während der Herstellung des Geräts 100 abgespeicherten) Zeitinformation über das auf dem Registrierungsserver 300 zu öffnende Zeitfenster ausgestattet sein und braucht deshalb keiner expliziten Benachrichtigung über den Start des Zeitfensters in Schritt S5. Andererseits ist es auch möglich, dass das elektronische Gerät 100 entweder von der vertrauenswürdigen Instanz 200 (in einem Schritt S5a) oder von dem Registrierungsserver 300 (in einem Schritt S6a) über den Start des Zeitfensters und gegebenenfalls über dessen Dauer bzw. Ende informiert wird.

Fig. 2 beschreibt die Architektur eines elektronischen Geräts 100 genauer. Das elektronische Gerät 100 kann beispielsweise ein beliebiges mobiles Endgerät, z.B. ein Mobilfunkendgerät, ein portabler Datenträger, wie z.B. eine Chipkarte, Mobilfunkkarte oder dergleichen, ein eingebettetes System oder ein Einchipsystem sein. Ein derartiges elektronisches Gerät 100 umfasst prinzipiell sämtliche notwendigen Ressourcen und Komponenten zur Ausführung von Applikationen und Diensten, insbesondere einen Prozessor CPU 104 sowie eine Speichereinrichtung bestehend aus einem RAM-Arbeitsspeicher 101, einem wiederbeschreibbaren Flash- oder EEPROM-Speicher 102 und einem ROM-Speicher 103 mit einem Betriebssystem 11.5 (OS). Ferner umfasst das Gerät 100 eine Datenkommunikationsschnittstelle 105 zur Datenkommunikation mit zumindest dem Zertifizierungsserver 300.

Vorzugsweise umfasst das elektronische Gerät 100 auch einen abgesicherten, isolierten Bereich 112 (TRUSTZONE), der einen durch Isolationsmechanismen vollständig abgeschotteten Bereich der Hardware- und Software-Ausstattung des elektronischen Geräts 100 bildet, insbesondere einen sicheren RAM-Speicher 107 (SEC RAM), um darin sicherheitskritische Daten abzuspeichern und sicherheitskritische Prozesse ausführen zu können. Insbesondere läuft in dem abgesicherten Bereich 112 eine sichere Laufzeitumgebung 113 (RTE; "Runtime Environment"), die in dem sicheren RAM 107 sicherheitskritische Prozesse ausführt. Durch eine vorzugsweise in dem abgesicherten Bereich 112 eingerichtete Registrierungseinrichtung 108 wird eine Initialisierung und Individualisierung des elektronischen Geräts 100 bzw. des abgesicherten, isolierten Bereichs 112 erreicht. Die Isolierung des abgesicherten Bereichs 112 von den übrigen Ressourcen des elektronischen Geräts 100 kann über bekannte Technologien erreicht werden, z.B. durch Virtualisierung in einem eingebetteten System oder durch einen eigenständigen, sicheren Prozessor auf dem selben Chip wie der eigentliche Applikationsprozessor 104.

Bei der in Fig. 2 skizzierten Ausführungsform ist die Registrierungseinrichtung 108 des elektronischen Geräts 100 als spezialisierter Bootlader 108 (Urlader) realisiert, der z.B. eine Erweiterung herkömmlicher Bootlader darstellen kann, die zum Starten ("Booten") eines Betriebssystems von einem "bootbaren" Speichermedium bzw. zum Starten ("Booten") eines eingebettetes Systems oder eines beliebigen anderen mobilen Endgeräts eingesetzt werden.

Bei dieser Ausführungsform wird der gesamte Zertifizierungsvorgang von dem Bootlader 108 im Rahmen des Bootvorgangs des Geräts 100 durchgeführt, wodurch die Zertifizierung bzw. Individualisierung zu einem möglichst frühen aber dennoch beliebigen Zeitpunkt nach Herstellung des Geräts 100 bzw. Ausgabe an einen Benutzer erfolgen kann. Vorzugsweise wird die Individualisierung des Geräts 100 im Rahmen des erstmaligen Bootens des Geräts 100 durchgeführt. Selbstverständlich kann die Registrierungseinrichtung auch als eigenständiges, in einem gesicherten Bereich des Flash-Speichers 102 abgelegtes Registrierungsmodul oder als im ROM-Speicher 103 liegendes Betriebssystemmodul 115 ausgestaltet sein, das zu einem beliebigen Zeitpunkt nach dem Booten des Geräts 100 aktiv wird.

Der Bootlader 108 erzeugt und speichert den privaten Schlüssel 109 des kryptographischen Schlüsselpaars in den abgesicherten Bereich des Flash-Speichers 102. Ebenso wird dort das von dem Registrierungsserver 300 empfangene Zertifikat 305 abgespeichert. Der Bootlader 108 sendet über die Datenkommunikationsschnittschnelle 105 die Zertifizierungsanfrage 114 an den Registrierungsserver 300, der zumindest eine Datenkommunikationsschnittstelle 301, einen Prozessor 302, einen Speicher 303 sowie eine von dem Prozessor 302 ausführbare Zertifizierungseinrichtung 304 umfasst. Die Zertifizierungseinrichtung 304 nimmt die Zertifizierungsanfrage 114 entgegen, erzeugt das Zertifikat 305 und schickt es an das elektronische Gerät 100 bzw. dessen Bootlader 108 zurück.

Ebenso über die Datenkommunikationsschnittstelle 301 kann der Registrierungsserver 300 mit der vertrauenswürdigen Instanz 200 kommunizieren, beispielsweise im Rahmen einer Authentisierung der vertrauenswürdigen Instanz 200 gegenüber dem Registrierungsserver 300 und dem nachfolgenden Einrichten des Zeitfensters auf dem Zertifizierungsserver 300 durch Start- und Endsignale 201, 202. Die vertrauenswürdige Instanz 200 kann prinzipiell jede beliebige Zwischeninstanz zwischen dem Hersteller des Geräts 100 und dem Benutzer des Geräts 100 repräsentieren, beispielsweise einen Händler, ein Kreditinstitut, eine Behörde oder dergleichen.

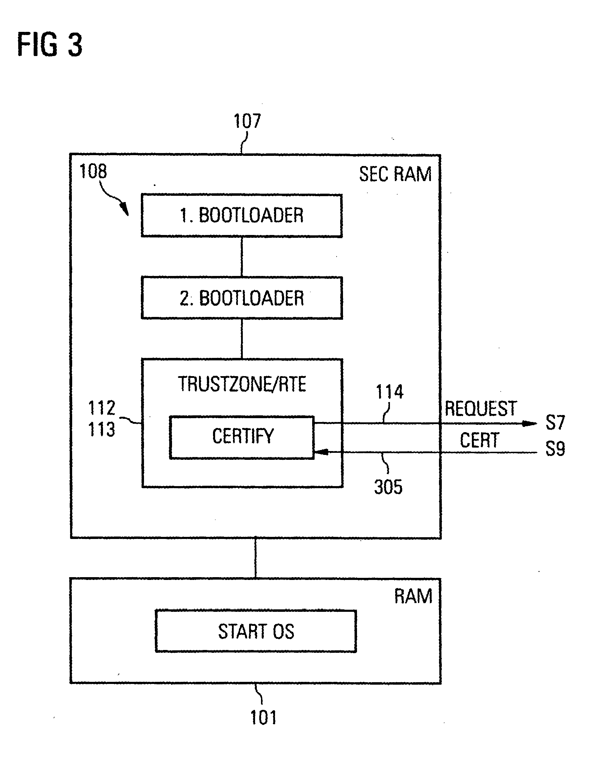

Fig. 3 illustriert einen Bootvorgang, der von dem Bootlader 108 innerhalb des sicheren RAM-Speichers 107 durchgeführt wird. Der in Fig. 3 skizzierte Bootvorgang ist mehrstufig und wird durch mehrere verschiedene Bootlader durchgeführt, die vorzugsweise jeweils verschiedene Systemkomponenten booten, beispielsweise das elektronische Gerät 100 bzw. dessen Hardware und Betriebssystem, den abgesicherten Bereich 112 und die sichere Laufzeitumgebung 113. Im Rahmen des Bootens des abgesicherten Bereichs 112 bzw. der sicheren Laufzeitumgebung 113 wird die Individualisierung des elektronischen Geräts 100 durch eine Zertifizierung gegenüber dem Zertifizierungsserver 300 durchgeführt. Der übliche im Zusammenhang mit einer sicheren Laufzeitumgebung 113 durchgeführte mehrstufige Bootvorgang wird also um eine kryptographische Initialisierung bzw. Individualisierung erweitert, die von dem Bootlader 108 optional beim erstmaligen Booten des elektronischen Geräts 100 durchgeführt wird. Anschließend wird das Betriebssystem 115 auf herkömmliche Weise in den ungesicherten Teil des RAM-Speichers 101 geladen.

Neben der im Zusammenhang mit den Fig.1 bis 3 beschriebenen Individualisierung der Geräts 100 können prinzipiell beliebige Dienste auf dem Gerät 100 mittels eines entsprechenden Registrierungsvorgangs gegenüber einem Registrierungsserver 300 registriert und auf dem Gerät freigeschaltet werden. Ein derartiger mittels einer Registrierung freizuschaltender Dienst kann insbesondere auch die Verwendung und Einrichtung des abgesicherten, isolierten Bereichs 112 bzw. der sicheren Laufzeitumgebung 113 sein, oder auch jeder andere dem Benutzer bereitstehende Softwareapplikation oder Hardware-Ressource. So ist es beispielsweise auch möglich, dass eine Registrierungsanfrage 114 die Freischaltung mehrerer Dienste betrifft und entsprechend mehrere Dienstidentifikationen in der Registrierungsanfrage enthalten sind, die von dem Registrierungsserver 300 wiederum einzeln oder gemeinsam beantwortet werden können. Entsprechend wird dann eine erneute Registrierung dieser Dienst durch den Registrierungsserver 300 blockiert.

Das Zeitfenster kann von der vertrauenswürdigen Instanz 200 in einer nahezu beliebigen Art und Weise auf dem Registrierungsserver 300 eingerichtet werden, und ist nicht auf einen Bootvorgang des Geräts 100 wie in Fig. 2 und 3 beschrieben beschränkt. Ein von dem Bootvorgang des Geräts 100 unabhängiges Zeitfenster ist insbesondere dann sinnvoll, wenn es sich bei dem freizuschaltenden Dienst nicht um eine grundsätzliche Funktionserweiterung, wie die kryptographische Individualisierung handelt, sondern um die Freischaltung eines oder mehrerer beliebiger Applikationen, die vor einer Ausführung auf dem Prozessor 104 des Geräts 100 z.B. zu Abrechnungszwecken gegenüber dem Registrierungsserver 300 registriert werden sollen.

Hierbei kann durch entsprechendes Einrichten des Zeitfensters eine Registrierung zu einem beliebigen Zeitpunkt (z.B. auch nach Absprache mit dem Benutzer) vorgesehen werden, um dem Benutzer des elektronischen Geräts einerseits eine maximale Bedienungsfreiheit hinsichtlich der in Anspruch genommenen Dienste zu ermöglichen und andererseits durch Einrichten einer zeitlichen Beschränkung mittels eines Zeitfensters den Sicherheitsanforderungen gerecht zu werden.

## Patentansprüche

1. Verfahren zum Freischalten eines von einem elektronischen Gerät (100) bereitgestellten Dienstes, umfassend die Schritte:
- Erzeugen (S3) einer Registrierungsanfrage (114) durch das Gerät (100) und Senden (S7) der Registrierungsanfrage (114) an einen Registrierungsserver (300);
- Erzeugen (S8) einer Registrierungsbestätigung (305) durch den Registrierungsserver (300) und Senden (S9) der Registrierungsbestätigung (305) an das Gerät (100); und
- Empfangen der Registrierungsbestätigung (305) durch das Gerät (100) und Freischalten des Dienstes durch Abspeichern (S10) der Registrierungsbestätigung (305);
**dadurch gekennzeichnet, dass**
sich eine vertrauenswürdige Instanz (200) gegenüber dem Registrierungsserver (300) authentifiziert (S4) und anschließend ein Zeitfenster auf dem Registrierungsserver (300) einrichtet (S5, S12), und die vertrauenswürdige Instanz (200) das Zeitfenster derart einrichtet (S5, S12), dass der Registrierungsserver (300) eine Registrierungsbestätigung (305) nur für eine innerhalb des eingerichteten Zeitfensters empfangene Registrierungsanfrage (114) sendet (S9) und dass das Gerät (100) die Registrierungsanfrage (114) innerhalb des Zeitfensters an den Registrierungsserver (300) sendet (S7).

2. Verfahren nach Anspruch 1, **dadurch gekennzeichnet, dass** die vertrauenswürdige Instanz (200) zum Einrichten (S5, S12) des Zeitfensters Zeitsignale (201, 202) an den Registrierungsserver (300) schickt, die einen Startzeitpunkt (S6) und einen Endzeitpunkt (S13) des Zeitfensters bestimmen.

3. Verfahren nach einem der Ansprüche 1 bis 2, **dadurch gekennzeichnet, dass** die vertrauenswürdige Instanz (200) das Zeitfenster zu einem beliebigen Startzeitpunkt (S6) nach der Ausgabe des Geräts (100) an einen Benutzer einrichten kann (S5).

4. Verfahren nach einem der Ansprüche 1 bis 3, **dadurch gekennzeichnet, dass** das Gerät (100) eine Registrierungsanfrage (114) erzeugt (S3), die eine eindeutige Identifikation des freizuschaltenden Dienstes umfasst, und der Registrierungsserver (300) die Freischaltung des Dienstes anhand der eindeutigen Identifikation protokolliert.

5. Verfahren nach einem der Ansprüche 1 bis 4, **dadurch gekennzeichnet, dass** als von dem Gerät (100) bereitzustellender Dienst ein abgesicherter Bereich (112) auf dem Gerät (100) oder ein individualisierter Betrieb des Geräts (100) freigeschaltet wird.

6. Verfahren nach Anspruch 6, **dadurch gekennzeichnet, dass** zum Freischalten des individualisierten Betriebs als Registrierungsanfrage eine Zertifikatanfrage (114) erzeugt wird (S3), die zumindest einen öffentlichen Schlüssel eines auf dem Gerät (100) vorliegenden oder von dem Gerät erzeugten asymmetrischen Schlüsselpaars umfasst, und als Registrierungsbestätigung ein Zertifikat (305) für den öffentlichen Schlüssel erzeugt wird (S8).

7. Verfahren nach Anspruch 6, **dadurch gekennzeichnet, dass** das Gerät (100) eine Zertifikatanfrage (114) erzeugt (S3), die eine eindeutige Geräteidentifikation umfasst, und der Registrierungsserver (300) eine erneute Zertifikatanfrage des Geräts (100) anhand der eindeutigen Geräteidentifikation erkennt und blockiert (S11).

8. Verfahren nach Anspruch 6 oder 7, **dadurch gekennzeichnet, dass** auf dem Gerät (100) ein abgesicherter Bereich (112) mit einer sicheren Laufzeitumgebung (113) eingerichtet ist und in dem abgesicherten Bereich (112) zumindest ein privater Schlüssel (109) des asymmetrischen Schlüsselpaars und das Zertifikat (305) abgespeichert werden (S2, S10).

9. Verfahren nach einem der Ansprüche 5 bis 8, **dadurch gekennzeichnet, dass** das Freischalten des individualisierten Betriebs des Geräts (100) von einem Bootlader (108) des Geräts (100) durchgeführt wird, der im Rahmen eines mehrstufigen Bootvorgangs des Geräts (100) ausgeführt wird.

10. Verfahren nach einem der Ansprüche 5 bis 9, **dadurch gekennzeichnet, dass** das Zeitfenster derart eingerichtet wird (S5, S12), dass das Freischalten des individualisierten Betriebs des Geräts (100) während eines erstmaligen Bootvorgangs des Geräts (100) erfolgt.

11. Elektronisches Gerät (100), umfassend einen Prozessor (104) und einen Speicher (101, 102) zum Bereitstellen eines Dienstes, eine Kommunikationsschnittstelle (105) zur Datenkommunikation mit zumindest einem Registrierungsserver (300) und eine Registrierungseinrichtung (108), die eingerichtet ist, eine Freischaltung des Dienstes durch Erzeugung einer Registrierungsanfrage (114), Senden der Registrierungsanfrage (114) an den Registrierungsserver (300) und Abspeichern einer von dem Registrierungsserver (300) empfangenen Registrierungsbestätigung (305) zu bewirken, **dadurch gekennzeichnet, dass** die Registrierungseinrichtung (108) eingerichtet ist, die Registrierungsanfrage (114) innerhalb eines von einer vertrauenswürdigen Instanz (200) auf dem Registrierungsserver (300) eingerichteten Zeitfensters an den Registrierungsserver (300) zu senden; wobei das Gerät (100) eingerichtet ist, mit oder ohne Beteiligung des von der vertrauenswürdigen Instanz (200) mit oder ohne Beteiligung des Registrierungsservers (300) über den Start des Zeitfensters informiert zu werden.

12. Gerät (100) nach Anspruch 11, **dadurch gekennzeichnet, dass** die Registrierungseinrichtung (108) eingerichtet ist, eine Freischaltung eines individualisierten Betriebs des Geräts (100) durch Erzeugung einer zumindest einen öffentlichen Schlüssel eines auf dem Gerät (100) vorliegenden asymmetrischen Schlüsselpaars umfassenden Zertifikatanfrage (114) und Abspeichern eines von dem Registrierungsserver (300) empfangenen Zertifikats (305) zu bewirken.

13. Gerät (100) nach Anspruch 12, **dadurch gekennzeichnet, dass** das Gerät (100) ein mobiles Endgerät, ein eingebettetes System oder ein Einchipsystem ist, in dem ein abgesicherter Bereich (112) mit einer sicheren Laufzeitumgebung (113) eingerichtet ist, und die Registrierungseinrichtung als Bootlader (108) realisiert ist, der eingerichtet ist, im Rahmen eines erstmaligen Bootvorgangs des Geräts (100) und/ oder des abgesicherten Bereichs (112) die Freischaltung eines individualisierten Betriebs des Geräts (100) zu bewirken, wobei der private Schlüssel (109) des asymmetrischen Schlüsselpaars und das Zertifikat (305) des öffentlichen Schlüssels in dem abgesicherten Bereich (112) gespeichert werden.

14. System, umfassend ein elektronisches Gerät (100) nach einem der Ansprüche 11 bis 13, einen Registrierungsserver (300) und eine vertrauenswürdige Instanz (200), wobei diese Systemkomponenten derart eingerichtet sind und zusammenwirken, dass ein von dem elektronischen Gerät (100) bereitgestellter Dienst gemäß einem Verfahren nach einem der Ansprüche 1 bis 10 freigeschaltet werden kann.

## Claims

1. A method for enabling a service made available by an electronic device (100), comprising the steps of:
- generating (S3) a registration request (114) by the device (100) and sending (S7) the registration request (114) to a registration server (300);
- generating (S8) a registration confirmation (305) by the registration server (300) and sending (S9) the registration confirmation (305) to the device (100); and
- receiving the registration confirmation (305) by the device (100) and enabling the service by saving (S10) the registration confirmation (305);
**characterized in that**
a trustworthy authority (200) authenticates itself (S4) to the registration server (300) and subsequently sets up (S5, S 12) a timeframe on the registration server (300), and the trustworthy authority (200) sets up (S5, S12) the timeframe such that the registration server (300) sends (S9) a registration confirmation (305) only for a registration request (114) received within the set-up timeframe, and the device (100) sends (S7) the registration request (114) to the registration server (300) within the timeframe.

2. The method according to claim 1, **characterized in that** the trustworthy authority (200) sends to the registration server (300), for setting up (S5, S 12) the timeframe, time signals (201, 202) which determine a starting time (S6) and an ending time (S 13) of the timeframe.

3. The method according to either of claims 1 to 2, **characterized in that** the trustworthy authority (200) can set up (S5) the timeframe at an arbitrary starting time (S6) after the issue of the device (100) to a user.

4. The method according to any of claims 1 to 3, **characterized in that** the device (100) generates (S3) a registration request (114) which comprises a unique identification of the service to be enabled, and the registration server (300) logs the enabling of the service on the basis of the unique identification.

5. The method according to any of claims 1 to 4, **characterized in that** as the service to be made available by the device (100) there is enabled a secured area (112) on the device (100) or an individualized operation of the device (100).

6. The method according to claim 5, **characterized in that** for enabling the individualized operation there is generated (S3) as the registration request a certificate request (114) which comprises at least a public key of an asymmetric key pair present on the device (100) or generated by the device, and there is generated (S8) as the registration confirmation a certificate (305) for the public key.

7. The method according to claim 6, **characterized in that** the device (100) generates (S3) a certificate request (114) which comprises a unique device identification, and the registration server (300) recognizes and blocks (S11) a new certificate request of the device (100) on the basis of the unique device identification.

8. The method according to claim 6 or 7, **characterized in that** on the device (100) there is set up a secured area (112) with a secure runtime environment (113), and in the secured area (112) there are saved (S2, S10) at least a private key (109) of the asymmetric key pair and the certificate (305).

9. The method according to any of claims 5 to 8, **characterized in that** the enabling of the individualized operation of the device (100) is carried out by a boot loader (108) of the device (100), which is executed within the framework of a multistage booting procedure of the device (100).

10. The method according to any of claims 5 to 9, **characterized in that** the timeframe is set up (S5, S12) such that the enabling of the individualized operation of the device (100) is effected during a first-time booting procedure of the device (100).

11. An electronic device (100) comprising a processor (104) and a memory (101, 102) for making available a service, a communication interface (105) for data communication with at least one registration server (300), and a registration unit (108) which is set up to effect an enabling of the service by generating a registration request (114), sending the registration request (114) to the registration server (300) and saving a registration confirmation (305) received from the registration server (300), **characterized in that** the registration unit (108) is set up to send the registration request (114) to the registration server (300) within a timeframe set up on the registration server (300) by a trustworthy authority (200); wherein the device (100) is set up to be informed about the start of the timeframe by the trustworthy authority (200) with or without the involvement of the registration server (200).

12. The device (100) according to claim 11, **characterized in that** the registration unit (108) is set up to effect an enabling of an individualized operation of the device (100) by generating a certificate request (114) comprising at least a public key of an asymmetric key pair present on the device (100), and saving a certificate (305) received from the registration server (300).

13. The device (100) according to claim 12, **characterized in that** the device (100) is a mobile terminal, an embedded system or a system-on-a-chip in which a secured area (112) with a secure runtime environment (113) is set up, and the registration unit is realized as a boot loader (108) which is set up to effect the enabling of an individualized operation of the device (100) within the framework of a first-time booting procedure of the device (100) and/or of the secured area (112), whereby the private key (109) of the asymmetric key pair and the certificate (305) of the public key are saved in the secured area (112).

14. A system comprising an electronic device (100) according to any of claims 11 to 13, a registration server (300) and a trustworthy authority (200), wherein said system components are set up and cooperate such that a service made available by the electronic device (100) can be enabled according to a method according to any of claims 1 to 10.

## Revendications

1. Procédé d'activation d'un service mis à disposition par un appareil électronique (100), comprenant les étapes :
- génération (S3) d'une demande d'enregistrement (114) par l'appareil (100) et envoi (S7) de la demande d'enregistrement (114) à un serveur d'enregistrement (300);
- génération (S8) d'une confirmation d'enregistrement (305) par le serveur d'enregistrement (300) et envoi (S9) de la confirmation d'enregistrement (305) à l'appareil (100); et
- réception de la confirmation d'enregistrement (305) par l'appareil (100) et activation du service par mémorisation (S10) de la confirmation d'enregistrement (305);
**caractérisée en ce que**
une instance fiable (200) s'authentifie (S4) vis-à-vis du serveur d'enregistrement (300) puis aménage (S5, S12) un créneau horaire sur le serveur d'enregistrement (300), et **en ce que** l'instance fiable (200) aménage (S5, S12) de telle sorte le créneau horaire que le serveur d'enregistrement (300) n'envoie (S9) une confirmation d'enregistrement (305) que pour une demande d'enregistrement (114) reçue à l'intérieur du créneau horaire aménagé, et **en ce que** l'appareil (100) envoie (S7) la demande d'enregistrement (114) à l'intérieur du créneau horaire au serveur d'enregistrement (300).

2. Procédé selon la revendication 1, **caractérisé en ce que** l'instance fiable (200), pour l'aménagement du (S5, S12) du créneau horaire, envoie au serveur d'enregistrement (300) des signaux horaires (201, 202) qui fixent un instant de démarrage (S6) et un instant de fin (S13) du créneau horaire.

3. Procédé selon une des revendications de 1 à 2, **caractérisé en ce que** l'instance fiable (200) peut aménager (S5) le créneau horaire à un instant quelconque de démarrage (S6) après la délivrance de l'appareil (100) à un utilisateur.

4. Procédé selon une des revendications de 1 à 3, **caractérisé en ce que** l'appareil (100) génère (S3) une demande d'enregistrement (114) qui comprend une identification univoque du service à activer, et **en ce que** le serveur d'enregistrement (300) relève l'activation d'un service au moyen de l'identification univoque.

5. Procédé selon une des revendications de 1 à 4, **caractérisé en ce que**, en tant que service devant être mis à disposition par l'appareil (100), une zone sécurisée (112) sur l'appareil (100) ou un fonctionnement individualisé de l'appareil (100) est activé.

6. Procédé selon la revendication 5, **caractérisé en ce que**, pour l'activation du service individualisé, il est généré (S3), en tant que demande d'enregistrement, une demande de certificat (114) qui comprend au moins une clé publique d'une paire de clés asymétrique se trouvant sur l'appareil (100) ou générée par l'appareil, et **en ce qu'**il est généré (S8) en tant que confirmation d'enregistrement un certificat (305) pour la clé publique.

7. Procédé selon la revendication 6, **caractérisé en ce que** l'appareil (100) génère (S3) une demande de certificat (114) qui comprend une identification univoque d'appareil, et **en ce que** le serveur d'enregistrement (300) reconnaît et bloque (S11) une nouvelle demande de certificat de l'appareil (100) au moyen de l'identification univoque d'appareil.

8. Procédé selon la revendication 6 ou 7, **caractérisé en ce que**, sur l'appareil (100), une zone sécurisée (112) ayant un environnement d'exécution (113) sécurisé est aménagée et **en ce que**, dans la zone sécurisée (112), au moins une clé privée (109) de la paire de clés asymétrique et le certificat (305) sont mémorisés (S2, S10).

9. Procédé selon une des revendications de 5 à 8, **caractérisé en ce que** l'activation du fonctionnement individualisé de l'appareil (100) est effectuée par un chargeur d'amorçage (108) de l'appareil (100) qui est exécuté dans le cadre d'un processus d'amorçage en plusieurs paliers de l'appareil (100).

10. Procédé selon une des revendications de 5 à 9, **caractérisé en ce que** le créneau horaire est aménagé (S5, S12) de telle manière que l'activation du fonctionnement individualisé de l'appareil (100) a lieu pendant un premier processus d'amorçage de l'appareil (100).

11. Appareil électronique (100), comprenant un processeur (104) et une mémoire (101, 102) pour la mise à disposition d'un service, une interface de communication (105) pour la communication de données avec au moins un serveur d'enregistrement (300) et un dispositif d'enregistrement (108) qui est configuré pour engendrer une activation du service par génération d'une demande d'enregistrement (114), par envoi de la demande d'enregistrement (114) au serveur d'enregistrement (300) et par mémorisation d'une confirmation d'enregistrement (305) reçue de la part du serveur d'enregistrement (300), **caractérisé en ce que** le dispositif d'enregistrement (108) est configuré pour envoyer la demande d'enregistrement (114) à l'intérieur d'un créneau horaire aménagé par une instance fiable (200) sur le serveur d'enregistrement (300); l'appareil (100) étant configuré pour être informé par l'instance fiable (200) avec ou sans participation du serveur d'enregistrement (300) du démarrage du créneau horaire.

12. Appareil (100) selon la revendication 11, **caractérisé en ce que** le dispositif d'enregistrement (108) est configuré pour engendrer une activation d'un fonctionnement individualisé de l'appareil (100) par génération d'une demande de certificat (114) comprenant au moins une clé publique d'une paire de clés asymétrique se trouvant sur l'appareil (100) et par mémorisation d'un certificat (305) reçu de la part du serveur d'enregistrement (300).

13. Appareil (100) selon la revendication 12, **caractérisé en ce que** l'appareil (100) est un terminal mobile, un système encastré ou un système mono puce dans lequel une zone sécurisée (112) ayant un environnement d'exécution (113) sécurisé est aménagée, et **en ce que** le dispositif d'enregistrement est réalisé sous forme de chargeur d'amorçage (108) qui est configuré pour, dans le cadre d'un premier processus d'amorçage de l'appareil (100) et/ou de la zone sécurisée (112), engendrer l'activation d'un fonctionnement individualisé de l'appareil (100), la clé privée (109) de la paire de clés asymétrique et le certificat (305) de la clé publique étant mémorisés dans la zone sécurisée (112).

14. Système, comprenant un appareil électronique (100) selon une des revendications de 11 à 13, un serveur d'enregistrement (300) et une instance fiable (200), ces composants du système étant configurés et co-agissant de telle façon qu'un service mis à disposition par l'appareil électronique (100) peut être activé suivant un procédé selon une des revendications de 1 à 10.
